# EUROPÄISCHE PATENTSCHRIFT

(11) **EP 1 571 425 B1**
(45) Veröffentlichungstag und Bekanntmachung des Hinweises auf die Patenterteilung: **04.03.2009**
(21) Anmeldenummer: 04026535.7
(22) Anmeldetag: 09.11.2004
(51) Int. Cl.: G01D 5/48

(54) **Magnetostriktiver Streckensensor**
Magnetostrictive displacement sensor
Détecteur de déplacement magnetostrictive

(30) Priorität: 25.02.2004 DE 202004002891 U
(43) Veröffentlichungstag der Anmeldung: 07.09.2005
(73) Patentinhaber: MTS Sensortechnologie GmbH Co. KG, 58513 Lüdenscheid (DE)
(72) Erfinder: Garneyer, Birgit, 58097 Hagen (DE); Hösl, Randolf, 58791 Werdohl (DE); Viola, Uwe, Cary, NC. 27513 (US); Heuckelbach, Rainer, 58513 Lüdenscheid (DE)
(74) Vertreter: Köchling, Conrad-Joachim

(56) Entgegenhaltungen:
- DE-A1- 10 201 880
- DE-A1- 10 234 960
- DE-C1- 4 316 046
- US-A- 4 098 128
- US-A- 5 206 586
- US-A- 5 313 160
- US-A- 5 680 041
- US-A- 5 723 870
- US-A1- 2002 135 359
- US-A1- 2003 076 089
- US-B1- 6 232 769
- US-B1- 6 351 117
- US-B1- 6 434 516

## Beschreibung

Die Erfindung betrifft einen magnetostriktiven Streckensensor zur Abgabe eines streckenabhängigen Signals mit einem magnetfeldempfindlichen Sensorelement, gemäß Oberbegriff des Anspruches 1.

Derartige Streckensensoren sind im Stand der Technik vielfach bekannt, wozu beispielsweise auf die DE 102 01 880 A1 verwiesen wird

Die US 6 434 516 B1 beschreibt ein Verfahren und eine Vorrichtung mit einem differenziellen Frequenzgenerator, der ein Messsignal in ein differenzielles Signal wandelt und einer Regelung zuführt.

Die US 6 351 117 B1 beschreibt ein Verfahren und eine Vorrichtung zur Erzeugung eines Ausgangssignals eines Messumformers für einen magnetostriktiven Streckensensor.

Die US 5 206 586 beschreibt einen magnetostriktiven Messumformer zur Positionserfassung.

Die US 5 680 041 beschreibt einen magnetostriktiven Streckensensor ähnlich der im Oberbegriff des Anspruches 1 angegebenen Art.

Ähnliche Messumformer beschreiben die US 2003/0076089 A1 und die US 2002/0135359 A1.

Ein solcher magnetostriktiver Streckensensor weist in der Regel einen draht- oder rohrförmigen in Messrichtung verlaufenden Wellenleiter aus magnetostriktivem Material auf. Durch einen kontaktlos nah an den Wellenleiter herangebrachten Positionsmagneten wird mittels Überlagerung von Magnetfeldern eine mechanisch- elastische Welle ausgelöst, die sich in beiden Richtungen entlang des Wellenleiters ausbreitet und an dessen Ende detektiert werden kann. Aufgrund der definierten Laufzeit kann die exakte Entfernung des Positionsmagneten von dem Ende des Wellenleiters bestimmt werden und damit die Position einer beweglichen Baugruppe, an welcher der Positionsmagnet befestigt ist. Bekanntermaßen wird der Wellenleiter in einem Stützkörper, z.B. einem Rohr aufgenommen, um eine mechanisch stabile Halterung zu erreichen und eine Anordnung an einem entsprechenden Bauteil zu ermöglichen. Die elektronischen Bauteile sind an einem Ende des Wellenleiters angeordnet, so beispielsweise eine Detektorspule, ein Villary-Bändchen, eine Signalaufbereitung und gegebenenfalls eine Diagnoseausgabe. Diese Elemente sind in einem Gehäuse untergebracht und damit gegen die Umgebung geschützt.

An einer entsprechenden zu überwachenden Maschine sind häufig mehrere solcher Streckensensoren angeordnet. Bei Maschinenstillstand ist es wichtig, das gegebenenfalls defekte Teil in der Anlage oder Maschine möglichst schnell zu identifizieren, um so die Kosten, die durch Produktionsausfall verursacht werden, gering zu halten. Sowohl bei der Inbetriebnahme als auch bei Wartungsarbeiten ergeben sich häufig Verzögerungen, weil die einzelnen Makrokomponenten einer Anlage keine oder zu allgemeine oder auch mehrdeutige Diagnosemeldungen abgeben.

Im Stand der Technik sind bei Sensoren mit BUS-Interface zum Teil optische Diagnoseausgaben vorgeschrieben. Diese beziehen sich aber ausschließlich auf die BUS- Kommunikation.

Ausgehend von diesem Stand der Technik liegt der Erfindung die Aufgabe zugrunde, einen Streckensensor angegebener Art zu schaffen, der eine schnelle und genaue Identifikation eines defekten Teiles ermöglicht.

Zur Lösung dieser Aufgabe wird vorgeschlagen, dass der Streckensensor in einen Programmiermodus setzbar ist und dass die Diagnoseausgabe mindestens ein Erfassungselement für die Funktion Sensorelement erkennt den Magneten umfasst.

Vorzugsweise ist zudem ein Erfassungselement für die Funktion Streckensensor befindet sich im Programmiermodus vorgesehen.

Des Weiteren ist ein Erfassungselement für die Spannungsüberwachung mit mindestens zwei Spannungswerten ungleich Null vorgesehen.

Bevorzugt ist dabei vorgesehen, dass die Diagnoseausgabe eine Infrarot- Schnittstelle umfasst.

Des Weiteren kann bevorzugt sein, dass die Diagnoseausgabe ein optisches Ausgabeelement, insbesondere im Wellenlängenbereich des sichtbaren Lichts, umfasst.

Zudem ist bevorzugt, dass die Diagnoseausgabe mindestens zwei Erfassungselemente gemäß Anspruch 1 bis 3 aufweist.

Durch die auf diese Weise differenzierte optische Diagnose wird die Fehlersuche an der entsprechenden Anlage oder dem Bauteil erheblich vereinfacht, wobei diagnostizierte Fehler oder Fehlbedienungen eindeutig zugeordnet und identifiziert werden können. Es ist daher beispielsweise nur der Austausch des exakt ermittelten Sensors erforderlich. Ein überflüssiger Austausch von Sensoren, die fälschlicher Weise als defekt angesehen werden, ist nicht mehr erforderlich.

Gemäß der Erfindung ist es beispielsweise durch die Spannungsüberwachung möglich, festzustellen, ob Spannung anliegt oder nicht und ob sich die Spannung im zulässigen Bereich befindet oder nicht. Auch kann festgestellt werden, ob beispielsweise nach der Programmierung des Sensors die Programmierung abgeschlossen wurde, was für die gewünschte Funktion des Sensors erforderlich ist, oder aber ob sich der Sensor noch im Programmiermodus befindet, so dass dieser zunächst abgeschlossen werden muss, bevor der Sensor seine eigentliche Aufgabe erfüllen kann. Auch kann durch die Erfindung festgestellt werden, ob der an dem zu überwachenden Bauteil befindliche Magnet zu weit weg positioniert ist oder gar außerhalb des Messbereiches positioniert ist. Die entsprechenden Daten können beispielsweise über die Infrarot-Schnittstelle mit einem Palm oder einem ähnlichen elektronischen Bauteil ausgelesen werden, wobei nicht nur die Tatsache des Fehlers, sondern auch der Wert des Fehlers erfasst werden kann.

Um bei einem Streckensensor nach dem Oberbegriff des Anspruches 1, bei dem die Signalaufbereitung eine Ausgabe des Signalerzeugers erfasst und einen streckenabhängigen Wert daraus ableitet oder bildet, der Streckensensor einen Ausgangssignalerzeuger aufweist, der den streckenabhängigen Wert in ein digitales oder analoges Ausgangssignal umsetzt und eine Interconnections- Beschaltung aufweist, die zwischen dem Ausgangssignalerzeuger und einen Ausgang zur Ausgabe des streckenabhängigen Signale geschaltet ist, die Schock- und Vibrationsempfindlichkeit herabzusetzen und eine Einkopplung von Störsignalen zu vermeiden, wird vorgeschlagen, dass mindestens eine der elektrischen Verbindungen zwischen
- Signalerzeuger und Signalaufbereitung,
- Ausgangssignalerzeuger und InterconnectionsBeschaltung
kabelfrei über separate Beschaltungen, insbesondere Platinen ausgebildet ist.

Im Stand der Technik sind Sensoren mit einteiligen Platinen bekannt, wobei solche Ausbildungen zu Sensoren mit großen Bauvolumina und mit erhöhter Schock- und Vibrationsempfindlichkeit führen. Sofern die Sensorelektronik auf mehrere Platinen verteilt ist, so steigt einerseits die Gefahr an, dass es während der Fertigung zu Verdrahtungsfehlern kommt, andererseits können die Verbindungsleitungen wie Antennen wirken und Störsignale in den Sensor einkoppeln, was zu einer erhöhten Empfindlichkeit im Bereich der EMV führt. Auch kann es zu schockbedingten Kabelbrüchen kommen. Im Stand der Technik ist es bekannt, einzelne elektronische Baugruppen und das Sensorelement über Kabel mit Steckverbindern miteinander zu verbinden.

Die Erfindung stellt eine Lösung zu Verfügung, bei der ein kompakter Elektronikaufbau erreicht ist, wobei durch den vollständig kabellosen Aufbau ein minimales Schaltungsvolumen und eine maximale Schock- und Vibrationsfestigkeit erreicht wird, wobei gleichzeitig die Störempfindlichkeit herabgesetzt wird und in der Fertigung eine hohe Zuverlässigkeit erreicht wird. Zur Erreichung dieser Vorteile ist auch vorgesehen, dass zumindest die Signalübertragung kabelfrei ausgebildet ist.

Zudem ist vorgesehen, dass mindestens eine der elektrischen Verbindungen als Steckverbindung ausgebildet ist.

Des Weiteren ist besonders bevorzugt vorgesehen, dass der Signalerzeuger mit einer ersten Platine kabelfrei verbunden ist, mit der eine zweite Platine mit Signalaufbereitungselementen und eine dritte Platine mit Ausgangssignalerzeugerelementen steckverbunden ist.

Dabei ist bevorzugt vorgesehen, dass die drei Platinen durch Steckverbinder verbunden sind, die jeweils alle drei Platinen miteinander verbinden.

Um die kompakte Bauweise noch zu fördern und die Störanfälligkeit zu mindern ist vorgesehen, dass die drei Platinen parallel zueinander übereinander ausgerichtet sind, wobei die erste Platine zwischen der zweiten und dritten Platine angeordnet ist und die elektronischen Elemente jeweils auf der Seite der zweiten oder dritten Platine angeordnet sind, die der ersten Platine zugewandt ist.

Zudem kann vorgesehen sein, dass auf der ersten Platine ein Bandfilter angeordnet ist.

Auch kann vorgesehen sein, dass die erste Platine unmittelbar mit dem Wellenleiter des Signalerzeugers verbunden ist.

Des Weiteren ist vorgesehen, dass die dritte Platine mit einer vierten Platine steckverbunden ist, die die Interconnections- Beschaltungselemente trägt.

Auch ist bevorzugt, dass die vierte Platine auf der dem Signalerzeuger abgewandten Seite des aus der ersten bis dritten Platine bestehenden Bauteils rechtwinklig zu diesen Platinen gerichtet angeordnet ist, so dass die Randkanten der ersten bis dritten Platine der dem Signalerzeuger zugewandten Fläche der vierten Platine benachbart sind.

Gemäß der Erfindung werden die einzelnen Platinen, die die entsprechenden elektronischen Bauteile tragen, in kompakter Form zusammengeführt und miteinander steckverbunden, so dass ein kompaktes Volumen der gesamten Baueinheit gebildet ist.

Gegenstand der Erfindung ist ferner ein Streckensensor, wobei die Signalaufbereitung eine Ausgabe des Signalerzeugers erfasst, der als Villary-Transformator ausgebildet ist und einen streckenabhängigen Wert bildet. Bei derartig ausgebildeten Streckensensoren können sich mechanisch ausgelöste Schwingungen mit dem Messsignal des Sensors überlagern und zu Fehlmessungen führen. Im Stand der Technik wird das Ausgangssignal des Villary- Transformators über Verstärkerstufen einem Komparator zur weiteren digitalen Verarbeitung zugeführt. Auch ist es bekannt, das Rohsignal sehr hoch zu verstärken, was aufgrund des schlechten Signal- Störabstandes als vorteilhaft angesehen wird. Eventuelle Filter sollen dann die Störsignale herausfiltern.

Um diese Nachteile zu vermeiden, schlägt die Erfindung vor, dass zwischen Signalaufbereitung und Sensorelement, z.B. einem Wellenleiter, ein passives Bandfilter geschaltet ist.

Erfindungsgemäß wird ein entsprechendes elektrisches Filter vorgesehen, welches den Einfluss der Umwelteinflüsse (Schock und Vibration) minimiert. Schock und Vibration erzeugen niederfrequente Überlagerungen, die das Messsignal beeinflussen. Durch das Bandfilter können diese Frequenzen herausgefiltert werden, so dass die durch die Umwelteinflüsse hervorgerufenen Messwertbeeinflussungen eliminiert werden können.

Bevorzugt kann dabei vorgesehen sein, dass das Bandfilter ein Hochpass ist.

Auch kann vorgesehen sein, dass das Bandfilter mit dem Villary-Transformator auf einem gemeinsamen Träger, insbesondere einer gemeinsamen Platine, angeordnet ist.

Zudem wird als vorteilhaft angesehen, dass das Bandfilter ein Schock- und/oder Vibrationsfilter ist.

Die Erfindung betrifft ferner einen Streckensensor, wobei die Signalaufbereitung eine Ausgabe des Signalerzeugers erfasst und einen streckenabhängigen Wert bildet und als Ausgangssignal zur Verfügung stellt.

Im industriellen Umfeld werden Sensoren häufig elektromagnetischen Störungen ausgesetzt, die häufig durch Antriebe, Frequenzumrichter oder Schweißanlagen hervorgerufen werden. Teilweise überschreiten diese Störungen auch die vorgegebenen Grenzwerte, was weitere Schutzmechanismen erfordert.

Im Stand der Technik ist es dazu bekannt, einzelne Baugruppen von einer ersten Abschirmung zu umhüllen, wobei die Verbindung aber nicht über abgeschirmte Leitungen erfolgt.

Um die Störfestigkeit zu verbessern schlägt die Erfindung daher vor, dass das Sensorelement von einer ersten Abschirmung, insbesondere einem Gehäuse aus elektrisch leitfähigem Material, vorzugsweise Metallblech, umgeben ist, die von einem Isolierstoffmantel und von einer zweiten Abschirmung, insbesondere einem Gehäuse aus elektrisch leitfähigem Material, vorzugsweise Metallblech, umgeben ist, wobei der verschiebbare Magnet außerhalb der zweiten Abschirmung angeordnet ist.

Bevorzugt ist dabei vorgesehen, dass der Signalerzeuger und die Signalaufbereitung auf einem gemeinsamen Träger innerhalb der ersten Abschirmung angeordnet sind.

Zudem kann bevorzugt vorgesehen sein, dass der gemeinsame Träger eine Platine oder eine Hybridschaltung ist.

Weiterhin wird als vorteilhaft angesehen, dass die Platine, insbesondere auch die erste bis vierte Platine, in ein vorzugsweise die erste Abschirmung bildendes Gehäuse eingesetzt sind, das vorzugsweise von der zweiten Abschirmung umgeben ist.

Zudem ist bevorzugt, dass das vorzugsweise die erste Abschirmung bildende Gehäuse Führungsnuten zum Einschieben, Führen und Halten der Platinen aufweist.

Auch kann vorgesehen sein, dass mehrere oder alle Platinen in ein formstabiles Hilfsgehäuse aus elektrisch nicht leitendem Material eingesetzt sind, das von der ersten Abschirmung umgeben ist.

Hierdurch wird der elektrische Kontakt zwischen Platinen und erstem Abschirmgehäuse vermieden. Zudem wird eine mechanische Führung erreicht und eine sichere Isolierung gegenüber dem ersten Abschirmgehäuse gewährleistet.

Bei den im Stand der Technik bekannten Streckensensoren reicht der Schutz für die Schutzart IP67 oft nicht aus, wenn beispielsweise Sensoren an Maschinen eingesetzt werden, an denen Bohr- oder Kühlflüssigkeiten eingesetzt werden. Des Weiteren führen altersbedingte Prozesse dazu, dass die Schutzart sich oft schon nach kurzer Einsatzdauer verschlechtert. Üblicherweise sind hierbei Flachdichtungen oder dergleichen zwischen den Gehäuseteilen angeordnet, wobei z.B. Öle bei Flachdichtungen mit geringer Anpresskraft über Kapilarwirkung leicht ins Innere des Sensors eindringen können.

Um die Abdichtung gegenüber der Umgebung zu verbessern, ist vorgesehen, dass das Gehäuse als offenes Hohlprofil ausgebildet und endseitig durch Deckelteile geschlossen ist und dass zwischen den Deckelteilen und der jeweiligen Gehäusemündung eine Profildichtung angeordnet ist, die einerseits einen ersten Bereich zwischen dem Stirnflächenrand des Gehäuses und dem Deckel und andererseits einen zweiten Bereich zwischen dem mündungsseitigen Gehäusewandungsbereich und einem in die Gehäusemündung eingreifenden Vorsprung des Deckels abdichtet.

Auch kann vorgesehen sein, dass die Dichtung einen Flachdichtungsbereich im ersten Dichtbereich aufweist, an dessen radial innen liegende Kante eine Dichtlippe als zweiter Dichtbereich ausgeschlossen ist, die radial nach außen gerichtet ist.

Zudem ist vorgesehen, dass der Deckel mittels Schrauben an dem Gehäuse befestigt ist, wobei die Dichtung vorzugsweise der zweite Dichtbereich, die Durchgriffslöcher für die Schrauben radial innen umgibt.

Durch die mehrfache Abdichtung insbesondere zwischen Deckel und Gehäuse wird die Schutzart auf Dauer sichergestellt, wobei die entsprechende Ausbildung der Dichtung eine höhere Anpresskraft ermöglicht und durch die Mehrfachdichtung auch eine höhere Schutzart erricht werden kann.

Gegenstand der Erfindung ist ferner ein Streckensensor, wobei im Gehäuse ein optischer Signalgeber angeordnet ist, dem ein optisch durchlässiger Gehäusebereich zugeordnet ist, der durch ein in eine Ausnehmung der Gehäusewandung oder des Gehäusedeckels eingepasstes Formstück aus optisch durchlässigem Material gebildet ist.

Im Stand der Technik ist es üblich, entsprechende Sichtfenster für optische Signalgeber in Gehäuseaussparungen oder Deckelaussparungen einzupressen oder einzukleben. Aufgrund von Fertigungstoleranzen und aufgrund unterschiedlicher Temperaturausdehungs-koeffizienten kommt es zwischen dem optisch durchlässigen und dem optisch nicht durchlässigen Gehäusebereich zu Spaltbildungen, über die Flüssigkeiten eindringen können.

Um die Dichtigkeit zu verbessern, wird vorgeschlagen, dass das optisch durchlässige Formstück mittels einer Dichtung gegenüber der Ausnehmung abgedichtet ist.

Dabei ist bevorzugt vorgesehen, dass das Formstück eine umlaufende Nut aufweist, in die die Dichtung, vorzugsweise ein O-Ring, eingesetzt ist, wobei sich die Dichtung vorzugsweise unter elastischer Vorspannung an der das Formstück umgebenden Laibung der Ausnehmung abstützt.

Zudem ist vorgesehen, dass das in die Ausnehmung eingesetzte Formstück an der Ausnehmung verstämmt ist.

Des Weiteren ist vorgesehen, dass das Formstück in die Ausnehmung bündig eingepasst ist, so dass es nicht über die Gehäusewandung oder Deckelwandung nach außen vorragt, und dass das Formstück innenseitig des Gehäuses oder Deckels über dessen Wandung vorragt und im vorragenden Bereich verstämmt ist, so dass es lagesicher fixiert ist.

Durch die erfindungsgemäße Ausbildung wird ein Ausgleich der fertigungsbedingten Toleranzen und der temperaturbedingten Relativbewegungen erreicht, ohne dass die Dichtwirkung aufgehoben wird. Das Eindringen von Flüssigkeiten oder dergleichen ist damit dauerhaft und sicher vermieden.

Gegenstand der Erfindung ist ferner ein Streckensensor nach dem, wobei mindestens ein steckbarer Ausgang an einem Gehäuseteil, insbesondere an einem Deckel des Gehäuses, vorgesehen ist, der Ausgang als Stecker oder Steckbuchse ausgebildet ist und dessen Abschirmung mit dem geschirmten Gehäuse oder Deckel verbunden ist. Im Stand der Technik ist es üblich, Gerätestecker oder dergleichen mittels eines Befestigungsringes beispielsweise an einem Durchbruch des Deckels zu befestigen. Hierdurch benötigt der Gerätestecker viel Einbauraum. Der elektrische Anschluss des Sensors erfolgt direkt über Kabel mittels PG- Verschraubung oder über verschraubte Steckanschlüsse.

Um den Einbauraum für solche Anschlüsse zu minimieren, wird vorgeschlagen, dass die äußere Abschirmung und/oder die Anschlusssicherung des Ausgangs einstückig mit dem Gehäuseteil verbunden ist.

Dabei ist vorgesehen, dass der Ausgang einen Stutzen mit Innen- oder Außengewinde aufweist oder durch diesen gebildet ist, wobei der Stutzen einstückig an das metallische Gehäuseteil oder den metallischen Deckel angeformt ist.

Auch kann vorgesehen sein, dass der metallische Deckel mehrere angeformte Stutzen aufweist.

Durch die einstückige Ausbildung von Anschlussstecker und Gehäusedeckel oder dergleichen Gehäuseteil entfällt die Steckerverschraubung oder dergleichen mit dem Gehäuse, was eine höhere Packungsdichte bei Mehrfachsteckanschlüssen erlaubt. Ferner entfällt eine Dichtkante je Steckanschluss, wodurch im Betrieb die Zuverlässigkeit der Schutzart erhöht wird.

Gegenstand der Erfindung ist ferner ein Streckensensor, wobei der Streckensensor mindestens einen Signalausgang aufweist, der aus dem Gehäuse herausgeführt ist.

Bei den üblichen Streckensensoren wächst die Variantenvielzahl ständig. Um insbesondere bei kleinen Stückzahlen keinen extremen Lagerbestand aufbauen zu müssen, ist es erforderlich, die Sensoren so flexibel wie möglich zu gestalten. Vielfach werden aber Sensoren wegen dieser Vielfalt bei der Inbetriebnahme durch Falschanschluss zerstört. Auch kann es beim Endanwender beispielsweise bei einer Wartung des Sensors problematisch sein, wenn die Schutzart verletzt wird oder der Sensor zur Neuanpassung umjustiert werden muss und unzugänglich ist.

Um eine zuverlässige Parametriermöglichkeit zu schaffen, die im Feld, also vor Ort, durchführbar ist und die Schutzart nicht verletzt, wird vorgeschlagen, dass an den Signalausgang ein Programmierer angeschlossen oder anschließbar ist, mittels dessen der Sensor programmierbar ist, insbesondere bei analogen Ausgangssignalen.

Bevorzugt ist dabei vorgesehen, dass die Signalleitungen des Signalausgangs kurzschluss- und fremdspannungsfest sind.

Zudem kann vorgesehen sein, dass der Signalausgang einen Sensor aufweist, mittels dessen die Ausgangsleitung überwacht ist, so dass bei Einspeisung von Eingangssignalen oder -daten der Sensor in einen Programmiermodus geschaltet ist und bei fehlenden Eingangssignalen in den Messmodus für Ausgangssignale geschaltet ist, gegebenenfalls kombiniert mit einem Zeitverzögerungselement.

Bevorzugt ist zudem, dass der Betriebsartenwechsel durch Fremdspannung, Kurzschluss oder aufmodulierte serielle Daten erfolgt.

Auch kann vorgesehen sein, dass für den Betriebsartenwechsel ein Zeitfenster installiert ist.

Gemäß der Erfindung beinhaltet der Signalausgang einen Sensor, der die Ausgangsleitung überwacht. Sofern Eingangssignale (Daten) in die Ausgangsleitung eingespeist werden, schaltet der Sensor in den Programmiermodus.

Analog schaltet der Sensor nach Einschalten in den Messmodus für Ausgangssignale, sofern keine Eingangssignale erfasst werden, gegebenenfalls nach einer kurzen Zeitspanne, die durch ein Zeitfenster vorgegeben ist.

Die Signalleitungen für die Messwertüberwachung werden vom Sensor überwacht. Erkennt der Sensor, dass an den Signalleitungen eine Programmiereinrichtung angeschlossen ist, so wechselt er in den Programmiermodus. Dieser Betriebsartwechsel kann durch Fremdspannung, Kurzschluss oder aufmodulierte serielle Daten erfolgen. Aus Gründen der Betriebssicherheit ist es dabei sinnvoll, diesen Betriebsartwechsel nur innerhalb eines bestimmten Zeitfensters nach dem Einschalten zuzulassen. Dies ist aber nicht zwingend.

An der Art oder dem Dateninhalt, der zum Betriebsartwechsel führt, erkennt der Sensor das angeschlossene Programmiergerät beispielsweise einen PC oder einen handgehaltenen Programmierer. Damit können über einen Ein-Draht-BUS bei analogem Ausgang oder über Vier- bzw. Zwei-Draht-BUS bei binärem Ausgang Diagnosedaten abgerufen, Ausgänge parametriert und justiert werden.

Dies sind im Wesentlichen
- Diagnosedatenabfragen (Softwareversion, Seriennummer, Gradient, Messzykluszeit, Herstelldatum, Art des Ausgangssignals, Speicherfehlermeldung, fehlender Positionsgeber, Spannung der Hilfsenergie, Spannung des Sensorelementes).
- Werkseinstellung wieder herstellen
- Erregerstrom an die Sensorlänge anpassen
- Abgleich des Sensorelementes (automatischer oder programmierter Festwert)
- Triggerung der Messung (extern, freilaufend, synchronisiert)
- Parametrieren des Ausgangssignals (Start/Stopp-Pulsweitenmodulation, Reflexionsart des Startsignals, Umfang der Mittelwertbildung, Wahl der Messrichtung, Wahl der Auflösung des Messwerts, Wahl des Signalhubs bei analogem Ausgang)
- Justage von Weg- und Geschwindigkeitsausgang (Anfangs- und Endwert).

Im Stand der Technik ist es üblich, digitale Sensoren mit BUS-Interface (Profibus, CAN, oder dergleichen) über den BUS zu parametrieren. Bei analogen Sensoren sind die meisten Parameter (z.B. 0-20 mA oder 4 bis 20 mA) über die Hardware festgelegt und können am geöffneten Sensor durch Schalter, Jumper, Brücken oder durch Bauteiletausch modifiziert werden. Die Justage des Nullpunkts bzw. des Endwerts wird mittels Taster oder Potentiometer durchgeführt, die durch eine Gehäuseöffnung zugänglich sind oder Potentiometer, die mittels Magneten durch die Gehäusewand hindurch betätigt werden.

Bei der Start/Stopp- Schnittstelle gibt es die Möglichkeit, die Seriennummer, die Messlänge, den Laufzeitgradienten, die Herstellerkennung und Fertigungsdatum mittels eines modifizierten Startimpulses über die Signalleitung auszulesen. Es ist auch schon bekannt, entsprechende Taster durch Reedschalter zu ersetzen, die durch die Gehäusewandung hindurch mittels Magneten als Betätigungselement dienen.

Bei der erfindungsgemäßen Gestaltung wird bei einer Endjustage im Feld, also vor Ort, die Schutzart des Sensors nicht verletzt. Ein Ausbau des Sensors ist nicht erforderlich. Abgleich, Parametrierung und Sensordiagnose können an jeder beliebigen Stelle der Leitung zwischen Sensor und Steuerung durchgeführt werden, beispielsweise im Schaltschrank, so dass auch schwer zugängliche Sensoren nachjustierbar sind.

Im Stand der Technik ist es bekannt, für unterschiedliche Ausführungen eine unterschiedliche Hardwareplattform zu verwenden (Start/Stopp-Pulsweitenmodulation).

Kleinere Anpassungen wie die Einstellung des Nullpunktes werden in der Fertigung an Abgleichplätzen eingestellt, indem mechanische oder digitale Potentiometer verstellt, Bauteile wie Widerstände, Schalter oder Brücken verändert werden.

Um die Ersatzteilhaltung zu vereinfachen, eine Justage vor Ort mit einfachen Mitteln zu ermöglichen und im Störfall eine detaillierte Diagnose zu ermöglichen, schlägt die Erfindung vor, dass der Streckensensor eine optische Schnittstelle aufweist, die an mindestens eines folgender Elemente angeschlossen ist:
- Diagnoseausgabespeicher,
- Messwertausgabespeicher oder Messwertausgabeelement,
- Signalarterfassungselement, z.B. Leseelement oder Signaländerungselement, Start/Stopp- Element, Pulsweitenmodulator, Analogsignalerfassungselement,
- Element zur Pulsbreiteneinstellung, zur Erkennung der Reflexionsart des Startsignals, zur Feststellung einer externen oder freilaufenden Messung,
Element zur Mittelwertbildung über 1 bis n-Messungen.

Durch die optische Schnittstelle ist mindestens eine der Funktionen aus der angegebenen Gruppe übertragbar. Beispielsweise ist die Ausgabe von Diagnoseinformationen möglich, wie beispielsweise Versionsnummer, Seriennummer, Herstelldatum, Messrate, Laufzeitkonstante, Speicherfehler, Positionsgeber fehlt, Spannung der Hilfsenergie, Spannung des Sensorelementes. Auch ist eine Messwertausgabe über die Schnittstelle übertragbar. Des Weiteren ist die Signalart des Ausganges (lesen und ändern), Start/Stopp- Pulsweitenmodulation, Analogsignale 0 bis 10 V, -10... +10 V, 0 bis 20 mA, 4 bis 20 mA möglich. Auch kann über die Schnittstelle das Ausgangssignal angepasst (geändert) werden, sowie eine Nullpunkteinstellung und Endwerteinstellung erfolgen. Zudem kann eine Pulsbreiteneinstellung, die Reflexionsart des Startsignals sowie eine externe oder freilaufende Messung übertragen werden. Schließlich ist auch über die Schnittstelle eine Mittelwertbildung über 1 bis n- Messungen (lesen und ändern) möglich. Die Erfindung erlaubt eine vereinfachte Ersatzteilhaltung, wobei eine Justage vor Ort mit einfachsten Mitteln ermöglicht ist und im Störfall eine detaillierte Diagnose abgefragt werden kann. Bei allen Justagearten bleibt die Schutzart erhalten. Ein Ausbau und Öffnen des Sensors ist nicht erforderlich.

Ein Ausführungsbeispiel eines magnetostriktiven Streckensensors ist in der Zeichnung dargestellt und im Folgenden näher beschrieben.

Es zeigt:
- Figur 1: einen magnetostriktiven Streckensensor in Ansicht, teilweise geschnitten;
- Figur 2: den Streckensensor in explosionsartiger Darstellung;
- Figur 3: eine Einzelheit in Seitenansicht;
- Figur 4: die Einzelheit in Schrägansicht;
- Figur 5: eine weitere Einzelheit im Schnitt gesehen;
- Figur 6: die Einzelheit in Ansicht;
- Figur 7: eine Einzelheit in Draufsicht;
- Figur 8: die Einzelheit im Schnitt A-A der Figur 7 gesehen;
- Figur 9: eine weitere Einzelheit in Ansicht;
- Figur 10: desgleichen im Schnitt gesehen;
- Figur 11: ein Betriebsschema des Streckensensors;
- Figur 12: eine Variante des Betriebsschemas.

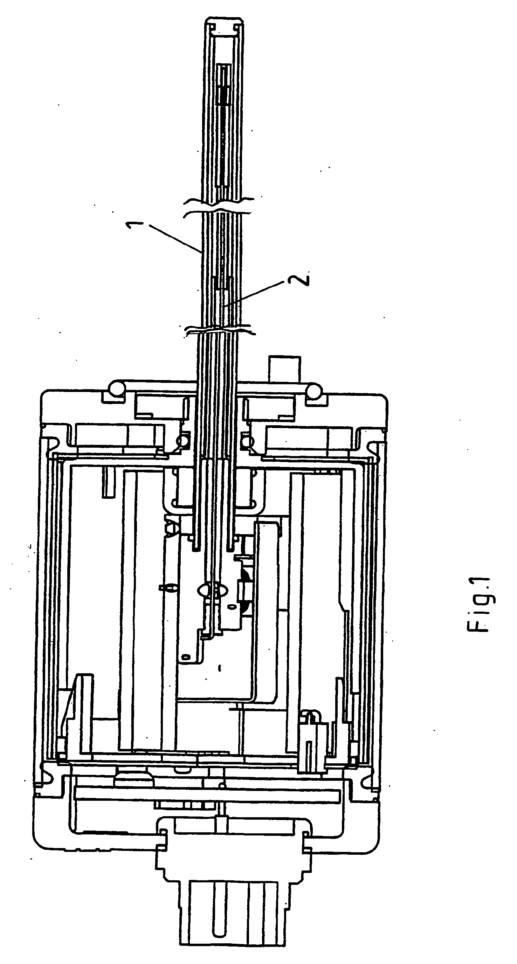

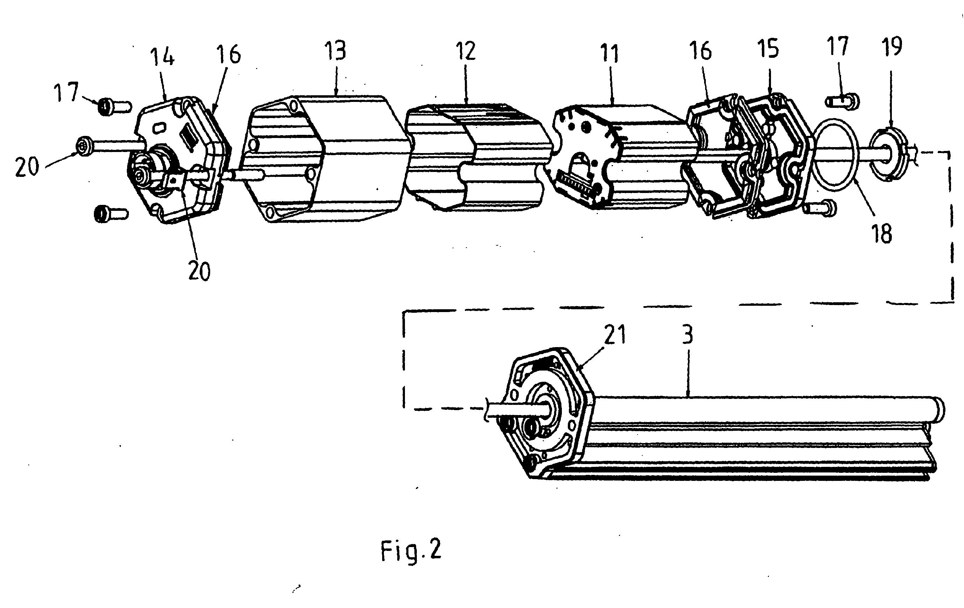

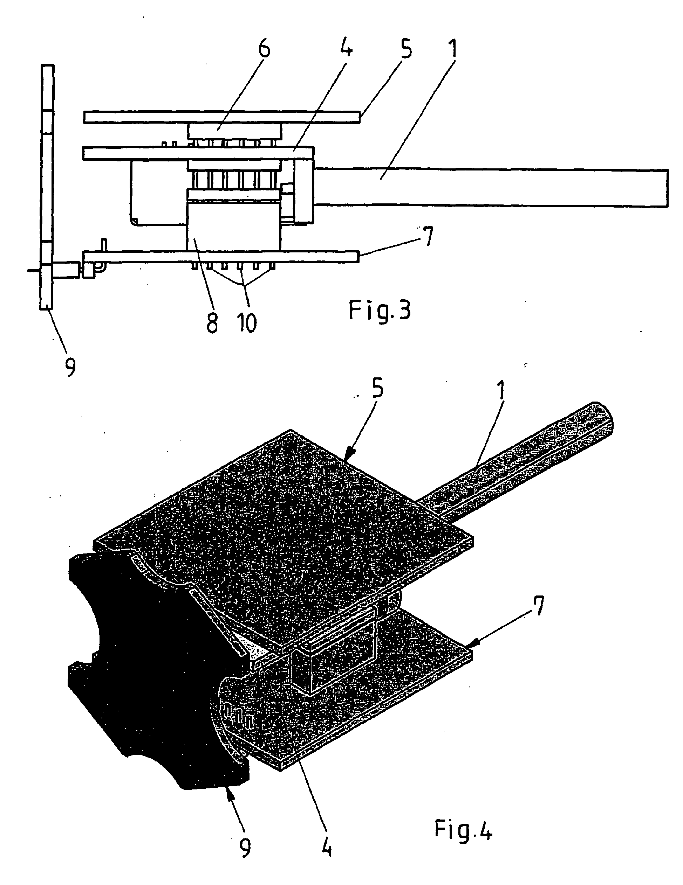

In Figur 1 und 2 ist allgemein ein magnetostriktiver Streckensensor zur Ausgabe eines streckenabhängigen Signals gezeigt. Hierbei verläuft in einem Schutzrohr 1 ein Wellenleiter 2, wobei das Schutzrohr noch von einem Stützkörper 3 umgeben ist. Die Elektronikbauteile sind im Wesentlichen in einem Element vereint, welches in Figur 3 und 4 gezeigt ist. Dieses Element umfasst die elektronischen Bauteile sowie ein Villary-Bändchen und eine Detektorspule. Bei dem in Figur 3 und 4 dargestellten Bauteil handelt es sich um eine Kombination einer mit dem bei 1 angeordneten Signalerzeuger verbundenen ersten Platine 4, auf der gegebenenfalls ein Bandfilter aufgebracht ist, einer zweiten Platine 5 mit Signalaufbereitungselementen 6, einer dritten Platine 7 mit Ausgangssignalerzeugerelementen 8 sowie einer vierten Platine 9 mit einer InterconnectionsBeschaltung. Die erste Platine 4 ist direkt mit dem Wellenleitersystem verbunden. Alle Platinen sind miteinander steckverbunden, wobei die Platinen 4,5,7 mit Abstand übereinander gleichgerichtet angeordnet sind und durch Steckverbinder 10 durchverbunden sind. Die Platine 9 ist rechtwinklig zu dem Platinenpaket (4,5,7) angeordnet, so dass insgesamt ein sehr kompaktes Platinenpaket gebildet ist.

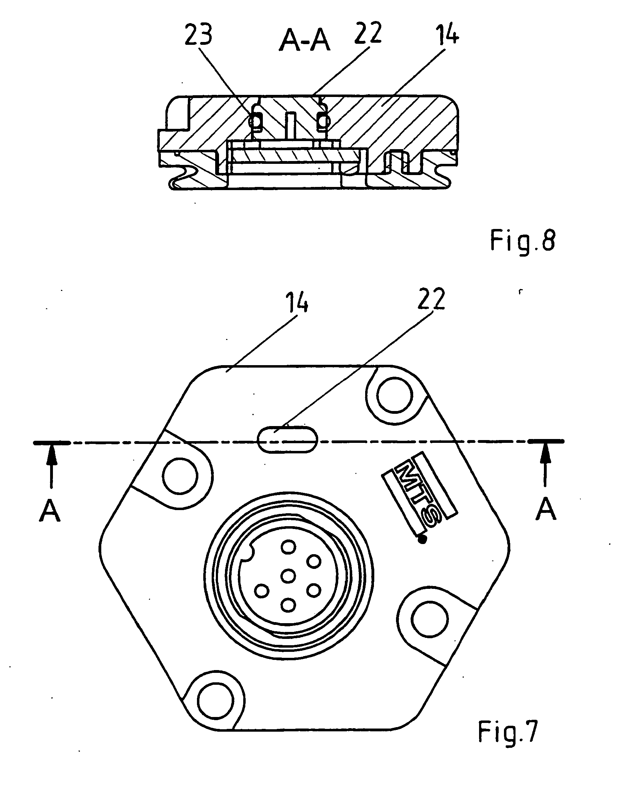

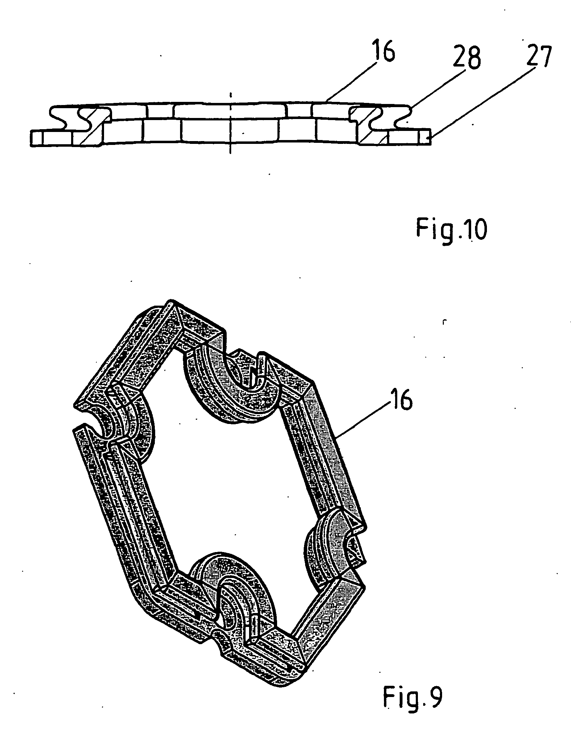

Das in Figur 3 und 4 dargestellte Element ist von einem Isolierstoffmantel umgeben und dieser ist wiederum von einer ersten Abschirmung 11 in Form eines Gehäuses umhüllt. Auf diese Abschirmung 11 ist eine formähnliche Hülse 12 aus Isolierstoff aufgeschoben, auf die wiederum eine zweite Abschirmung 13 in Form eines metallischen Gehäuseteils aufgeschoben ist. Die so gebildete Baueinheit ist endseitig durch Deckel 14,15 verschlossen, die unter Zwischenlage einer Dichtung 16 abgedichtet angeordnet sind. Eine entsprechende Deckel- und Dichtungsanordnung ist in Figur 7 bis 10 gezeigt. Die Verbindung des Deckels 14 bzw. 15 mit dem Gehäuseteil 13 erfolgt mittels Schrauben 17, wobei gegebenenfalls noch ein Dichtring 18 und ein Befestigungselement 19 vorgesehen sind, sowie Schrauben 20, die durch das Gehäuse 13 hindurchgeführt sind und jenseits des Gehäuses mit einem Abdeckteil 21 verschraubt sind.

Das Gehäuseteil 11 kann Führungs- und Einschubnuten aufweisen, in die die Ränder der Platinen 5 bzw. 7 passend eingreifen.

Die Dichtungen 16 sind als mehrstufige Profildichtungen ausgebildet, die einerseits mit einem Bereich 27 zwischen die Stirnflächen von Gehäuse und Deckel greifen und andererseits mit einem zweiten Bereich 28 in das Gehäuse eingreifen und sich an der Gehäusewandung innenseitig abstützen. Wie beispielsweise in Figur 8 gezeigt, greift der entsprechende Deckel 14 teilweise in die Dichtung ein wobei die Dichtung 16 Durchgriffslöcher für die Schrauben aufweist und der Dichtungsbereich 28 diese Lochungen radial innen umgibt.

Insbesondere aus Figur 7 und 8 ersichtlich, ist ein optisch durchlässiger Gehäusebereich 22 ausgebildet, hinter dem ein optischer Signalgeber angeordnet ist. Der durchlässige Gehäusebereich 22 ist ein in eine Ausnehmung des Deckels 14 eingepasstes Formstück aus optisch durchlässigem Material, welches mittels einer Dichtung 23 gegenüber der Ausnehmung des Deckels 14 abgedichtet ist. Hierzu weist das Formstück umlaufend eine Ringnut auf, in die die Dichtung 23, vorzugsweise ein O-Ring, eingelegt ist, wobei sich die Dichtung 23 vorzugsweise unter elastischer Vorspannung an der das Formstück umgebenden Laibung der Ausnehmung des Deckels 14 abstützt. Zusätzlich ist das Formstück an der Ausnehmung innenseitig verstämmt.

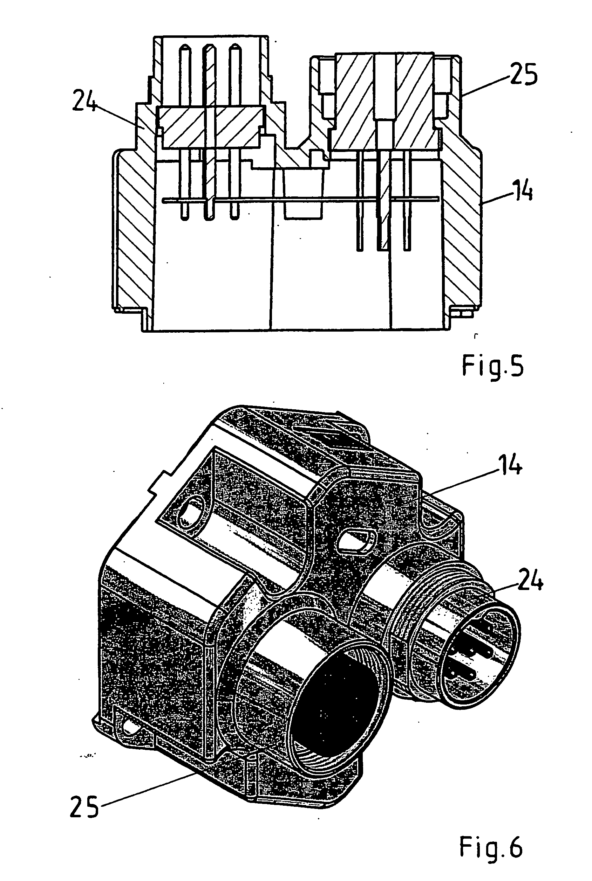

Bei der Herstellung gemäß Figur 5 und 6 ist ein anders gestalteter Deckel vorgesehen, der ebenfalls das Bezugszeichen 14 trägt. Dieser Deckel weist zwei steckbare Ausgänge auf, deren einer als Stecker und deren anderer als Steckbuchse ausgebildet ist. Hierbei ist die äußere Abschirmung 24,25 einstückig mit dem Gehäuseteil (14) ausgebildet, so dass keine zusätzliche Abdichtung oder Verbindung von Abschirmungselementen erforderlich ist. Aufgrund der so erzielten Platzersparnis ist es möglich, an dem Deckel 14 ohne weiteres zwei solcher Elemente vorzusehen.

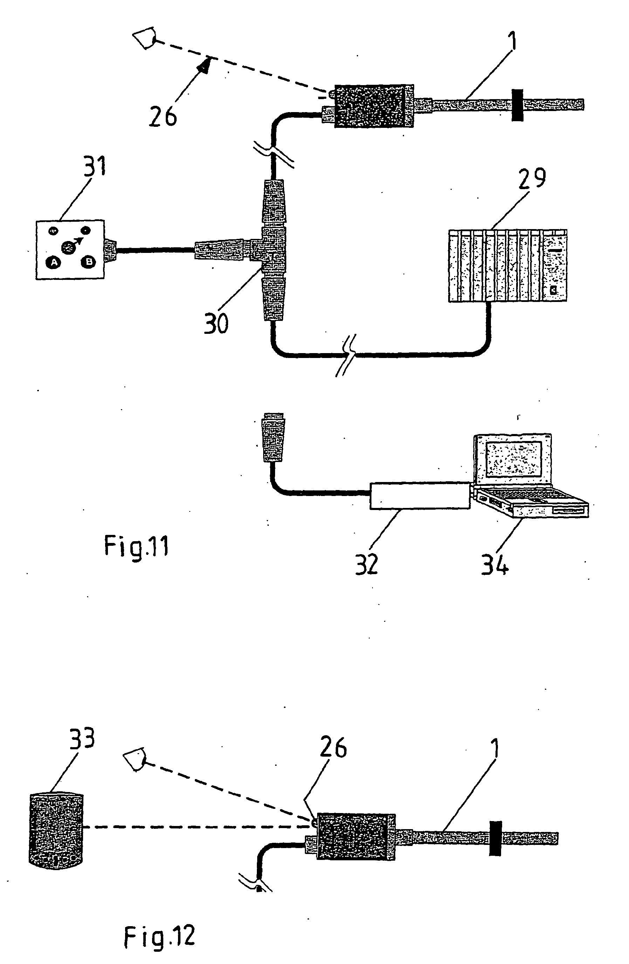

In Figur 11 und 12 ist ganz allgemein der Sensor gezeigt, wobei der Sensor einen optischen Signalausgang aufweist, der durch den Pfeil 26 identifiziert ist. Zusätzlich ist der Sensor über eine Verbindungsleitung mit einer (SPS) Steuerung 29 verbunden. In die Verbindungsleitung ist ein T-Anschlussstück 30 eingeschaltet, an welches ein handgehaltener Programmierer 31 ansteckbar ist. Alternativ kann auch anstelle der Steuerung 29 beispielsweise ein Interface 32 und ein PC 34 angeschlossen werden. Auf diese Weise ist die Parametrierung und Datenerfassung in einfacher Weise ermöglicht.

Bei der Darstellung in Figur 12 ist ebenfalls ein optischer Ausgang 26 vorgesehen, wobei beispielsweise über einen handgehaltenen Programmierer 33 drahtlos eine Diagnose oder eine Justage erfolgen kann.

Die Erfindung ist nicht auf das Ausführungsbeispiel beschränkt, sondern im Rahmen der Offenbarung vielfach variabel.

## Patentansprüche

1. Magnetostriktiver Streckensensor zur Abgabe eines streckenabhängigen Signals mit einem magnetfeldempfindlichen Sensorelement, das ein Signalerzeuger ist, einer Signalaufbereitung mit Signalaufbereitungselementen (6) und gegebenenfalls einer Diagnoseausgabe, die in einem Gehäuse untergebracht sind, sowie mit einem verschiebbaren Magneten, der auf das Sensorelement wirkt, **dadurch gekennzeichnet, dass** der Streckensensor in einen Programmiermodus setzbar ist und dass die Diagnoseausgabe mindestens ein Erfassungselement für die Funktion Sensorelement erkennt einen Magneten umfasst.

2. Streckensensor nach Anspruch 1, in welchem die Diagnoseausgabe ein weiteres Erfassungselement für die Funktion Streckensensor befindet sich im Programmiermodus umfasst.

3. Streckensensor nach einem der Ansprüche 1 oder 2, in welchem Diagnoseausgabe ein weiteres Erfassungselement für die Spannungsüberwachung mit mindestens zwei Spannungswerten ungleich Null umfasst.

4. Streckensensor nach einem der Ansprüche 1 bis 3, in welchem die Diagnoseausgabe eine Infrarot-Schnittstelle umfasst.

5. Streckensensor nach einem der Ansprüche 1 bis 4, in welchem die Diagnoseausgabe ein optisches Ausgabeelement, insbesondere im Wellenlängenbereich des sichtbaren Lichts, umfasst.

6. Streckensensor nach einem der Ansprüche 1 bis 5, in welchem die Diagnoseausgabe mindestens zwei Erfassungselemente gemäß Anspruch 1 bis 3 aufweist.

7. Streckensensor nach einem der Ansprüche 1 bis 6, in welchem die Signalaufbereitung eine Ausgabe des Signalerzeugers erfasst und einen streckenabhängigen Wert daraus ableitet oder bildet, der Streckensensor einen Ausgangssignalerzeuger mit Ausgangssignalerzeugungselementen (8) aufweist, der den streckenabhängigen Wert in ein digitales oder analoges Ausgangssignal umsetzt, und eine Interconnectionsbeschaltung aufweist, die zwischen den Ausgangssignalerzeuger und einen Ausgang zur Ausgabe des streckenabhängigen Signals geschaltet ist, und dass mindestens eine der elektrischen Verbindungen zwischen
- Signalerzeuger und Signalaufbereitung; Ausgangssignalerzeuger und Interconnectionsbeschaltung;
- kabelfrei über separate Beschaltungen, insbesondere Platinen ausgebildet ist.

8. Streckensensor nach Anspruch 7, in welchem zumindest die Signalübertragung kabelfrei ausgebildet ist.

9. Streckensensor nach einem der Ansprüche 7 oder 8, in welchem mindestens eine der elektrischen Verbindungen als Steckverbindung ausgebildet ist.

10. Streckensensor nach einem der Ansprüche 7 bis 9, in welchem der Signalerzeuger mit einer ersten Platine (4) kabelfrei verbunden ist, mit der eine zweite Platine (5) mit Signalaufbereitungselementen (6) und eine dritte Platine (7) mit Ausgangssignalerzeugerelementen (8) steckverbunden ist.

11. Streckensensor nach Anspruch 10, in welchem die drei Platinen (4,5,7) durch Steckverbinder (10) verbunden sind, die jeweils alle drei Platinen (4,5,7) miteinander verbinden.

12. Streckensensor nach einem der Ansprüche 10 oder 11, in welchem mindestens zwei der drei Platinen (4,5,7) mit ihren flächigen Seiten insbesondere parallel zueinander übereinander ausgerichtet sind, wobei insbesondere die erste Platine (4) zwischen der zweiten (5) und dritten Platine (7) angeordnet ist und insbesondere die elektronischen Elemente überwiegend oder alle jeweils (5) auf der Seite der zweiten oder dritten Platine (7) angeordnet sind, die der ersten Platine (4) zugewandt ist.

13. Streckensensor nach einem der Ansprüche 10 bis 12, in welchem auf der ersten Platine (4) ein Bandfilter angeordnet ist.

14. Streckensensor nach einem der Ansprüche 10 bis 13, in welchem die erste Platine (4) unmittelbar mit dem Wellenleiter (2) des Signalerzeugers verbunden ist.

15. Streckensensor nach einem der Ansprüche 10 bis 14, in welchem die dritte Platine (7) mit einer vierten Platine (9) insbesondere steckverbunden ist, die die Interconnections-Beschaltungselemente trägt.

16. Streckensensor nach einem der Ansprüche 10 bis 15, in welchem die vierte Platine (9) auf der dem Signalerzeuger abgewandten Seite des aus der ersten bis dritten Platine (4,5,7) gebildeten Bauteils quer, insbesondere rechtwinklig zu diesen Platinen gerichtet angeordnet ist, so dass die dem Signalerzeuger abgewandten Randkanten der ersten bis dritten Platine (4,5,7) der dem Signalerzeuger zugewandten Fläche der vierten Platine (9) benachbart sind.

17. Streckensensor nach einem der Ansprüche 1 bis 16, in welchem die Signalaufbereitung eine Ausgabe des Signalerzeugers erfasst, der als Villary-Transformator ausgebildet ist und einen streckenabhängigen Wert bildet, und dass zwischen Signalaufbereitung und Sensorelement, zum Beispiel einem Wellenleiter (2), ein passives Bandfilter geschaltet ist.

18. Streckensensor nach Anspruch 17, in welchem das Bandfilter ein Hochpass ist.

19. Streckensensor nach einem der Ansprüche 17 oder 18, in welchem das Bandfilter mit dem Villary-Transformator auf einem gemeinsamen Träger, insbesondere einer gemeinsamen Platine, angeordnet ist.

20. Streckensensor nach einem der Ansprüche 17 bis 19, in welchem das Bandfilter ein Schock- und/oder Vibrationsfilter ist.

21. Streckensensor nach einem der Ansprüche 1 bis 20, in welchem die Signalaufbereitung eine Ausgabe des Signalerzeugers erfasst und einen streckenabhängigen Wert bildet und als Ausgangssignal zur Verfügung stellt, und dass das Sensorelement von einer ersten Abschirmung (11), insbesondere einem Gehäuse aus elektrisch leitfähigem Material, vorzugsweise Metallblech, umgeben ist, die von einem Isolierstoffmantel und von einer zweiten Abschirmung (13), insbesondere einem Gehäuse aus elektrisch leitfähigem Material, vorzugsweise Metallblech, umgeben ist, wobei ein verschiebbarer Magnet außerhalb der zweiten Abschirmung (13) anordbar ist.

22. Streckensensor nach Anspruch 21, in welchem der Signalerzeuger und die Signalaufbereitung auf einem gemeinsamen Träger innerhalb der ersten Abschirmung (11) angeordnet sind.

23. Streckensensor nach Anspruch 22, in welchem der gemeinsame Träger mindestens eine Platine oder eine Hybridschaltung ist

24. Streckensensor nach Anspruch 23, in welchem die Platine, insbesondere auch eine erste bis vierte Platine (4,5,7,9), in ein vorzugsweise die erste Abschirmung (11) bildendes Gehäuse eingesetzt sind, das vorzugsweise von der zweiten Abschirmung (13) umgeben ist.

25. Streckensensor nach Anspruch 24, in welchem das vorzugsweise die erste Abschirmung (11) bildende Gehäuse Führungsnuten zum Einschieben, Führen und Halten der Platinen (4,5,7,9) aufweist.

26. Streckensensor nach einem der Ansprüche 23 bis 25, in welchem mehrere oder alle Platinen (4,5,7,9) in ein formstabiles Hilfsgehäuse aus elektrisch nicht leitendem Material eingesetzt sind, das von der ersten Abschirmung (11) umgeben ist.

27. Streckensensor nach einem der Ansprüche 1 bis 26, in welchem das Gehäuse als offenes Hohlprofil ausgebildet und endseitig durch Deckelteile (14,15) geschlossen ist, und dass zwischen den Deckelteilen (14,15) und der jeweiligen Gehäusemündung eine Profildichtung angeordnet ist, die einerseits einen ersten Bereich zwischen dem Stirnflächenrand des Gehäuses und dem Deckel und andererseits einen zweiten Bereich an dem mündungsseitigen Gehäusewandungsinnenbereich abdichtet, insbesondere in Wirkverbindung mit einem in die Gehäusemündung eingreifenden Vorsprung des Deckels.

28. Streckensensor nach Anspruch 27, in welchem die Dichtung einen Flachdichtungsbereich im ersten Dichtbereich (27) aufweist, an dessen radial innen liegende Erstreckung, insbesondere Kante eine Dichtlippe als zweiter Dichtbereich (28) angeschlossen ist, die axial beabstandet zum ersten Dichtbereich (27) radial nach außen gerichtet ist.

29. Streckensensor nach einem der Ansprüche 27 oder 28, in welchem der Deckel (14,15) mittels Anziehelement, insbesondere Schrauben (17), an dem Gehäuse befestigt ist, wobei die Dichtung, vorzugsweise auch der zweite Dichtbereich (28), die Durchgriffslöcher für die Anziehmittel radial innen umgibt.

30. Streckensensor nach einem der Ansprüche 1 bis 29, in welchem im Gehäuse ein optischer Signalgeber angeordnet ist, dem ein optisch durchlässiger Gehäusebereich (22) zugeordnet ist, der durch ein in eine Ausnehmung der Gehäusewandung oder des Gehäusedeckels eingepasstes Formstück aus optisch durchlässigem Material gebildet ist, und dass das optisch durchlässige Formstück mittels einer Dichtung (23) gegenüber der Ausnehmung abgedichtet ist.

31. Streckensensor nach Anspruch 30, in welchem das Formstück eine umlaufende Nut aufweist, in die die Dichtung (23), vorzugsweise ein O-Ring, eingesetzt ist, wobei sich die Dichtung (23) vorzugsweise unter elastischer Vorspannung an der das Formstück umgebenden Laibung der Ausnehmung abstützt.

32. Streckensensor nach einem der Ansprüche 30 oder 31, in welchem das in die Ausnehmung eingesetzte Formstück an der Ausnehmung verstämmt ist.

33. Streckensensor nach Anspruch 32, in welchem das Formstück in die Ausnehmung bündig eingepasst ist, so dass es nicht über die Gehäusewandung oder Deckelwandung nach außen vorragt, und dass das Formstück innenseitig des Gehäuses oder Deckels über dessen Wandung vorragt und im vorragenden Bereich verstämmt ist, so dass es lagesicher fixiert ist.

34. Streckensensor nach einem der Ansprüche 1 bis 33, in welchem mindestens ein steckbarer Ausgang an einem Gehäuseteil, insbesondere an einem Deckel des Gehäuses vorgesehen ist, der Ausgang als Stecker oder Steckbuchse ausgebildet ist und dessen Abschirmung mit dem geschirmten Gehäuse oder Deckel verbunden ist, und dass die äußere Abschirmung (24,25) und/oder die Anschlusssicherung des Ausgangs einstückig mit dem Gehäuseteil verbunden ist.

35. Streckensensor nach Anspruch 34, in welchem der Ausgang einen Stutzen mit Innen- oder Außengewinde aufweist oder durch diesen gebildet ist, wobei der Stutzen einstückig an das metallische Gehäuseteil oder den metallischen Deckel angeformt ist.

36. Streckensensor nach Anspruch 35, in welchem der metallische Deckel mehrere angeformte Stutzen aufweist.

37. Streckensensor nach einem der Ansprüche 1 bis 36, in welchem der Streckensensor mindestens einen Signalausgang aufweist, der aus dem Gehäuse herausgeführt ist, und dass an den Signalausgang ein Programmierer (31) angeschlossen oder anschließbar ist, mittels dessen der Sensor programmierbar ist, insbesondere bei analogen Ausgangssignalen.

38. Steckensensor nach Anspruch 37, in welchem die Signalleitungen des Signalausgangs kurzschluss- und fremdspannungsfest sind.

39. Streckensensor nach einem der Ansprüche 37 oder 38, in welchem der Signalausgang einen Sensor aufweist, mittels dessen die Ausgangsleitung überwacht ist, so dass bei Einspeisung von Eingangsignalen oder -daten der Sensor in einen Programmiermodus geschaltet ist und bei fehlenden Eingangssignalen in den Messmodus für Ausgangssignale geschaltet ist, gegebenenfalls kombiniert mit einem Zeitverzögerungselement.

40. Streckensensor nach Anspruch 39, in welchem der Betriebsartenwechsel durch Fremdspannung, Kurzschluss oder aufmodulierte serielle Daten erfolgt.

41. Streckensensor nach Anspruch 40, in welchem für den Betriebsartenwechsel ein Zeitfenster installiert ist.

42. Streckensensor nach einem der Ansprüche 1 bis 41, in welchem der Streckensensor eine optische Schnittstelle aufweist, die an mindestens eines folgender Elemente angeschlossen ist:
- Diagnoseausgabespeicher,
- Messwertausgabespeicher oder Messwertausgabeelement,
- Signalarterfassungselement, z. B. Leseelement oder Signaländerungselement, Start/Stopp-Element, Pulsweitenmodulator, Analogsignalerfassungselement,
- Element zur Pulsbreiteneinstellung, zur Erkennung der Reflexionsart des Startsignals, zur Feststellung einer externen oder freilaufenden Messung,
- Element zur Mittelwertbildung über 1 bis n-Messungen.

## Claims

1. Magnetostrictivc elongation sensor for outputting an elongation-dependent signal, comprising: a magnetic-field-sensitive sensor, which is a signal generator, a signal processor with signal processing components (6) and possibly a diagnostic output, which are accommodated in a housing and a shiftable magnet, which acts on the sensor, **characterized in that** the elongation sensor can be set to a programming mode and that the diagnostic output comprises at least one detector for the function of sensor element recognizing a magnet;

2. Elongation sensor according to claim 1, wherein the diagnostic output comprises a further detector element for the function of elongation sensor set to the programming mode.

3. Elongation sensor according to claims 1 or 2, wherein the diagnostic output includes a further detector for voltage monitoring with at least two voltage values different from zero.

4. Elongation sensor according to claims 1 - 3, wherein the diagnostic output comprises an infrared interface.

5. Elongation sensor according to anyone of claims 1 - 4, wherein the diagnostic output comprises an optical output element, particularly in the wavelength range of visible light.

6. Elongation sensor according to anyone of claims 1 - 5, wherein the diagnostic output has at least two detectors in accordance with claims 1 - 3.

7. Elongation sensor according to claims 1 - 6, wherein the signal processor includes an output signal generator deriving or producing an elongation-dependent value, the elongation sensor comprising an output signal generator with output signal generator component (8), which converts the elongation-dependent value into a digital or analogue output signal, and having an interconnection circuit, which is connected between the output signal generator and an output to transmit the elongation-dependent signal and wherein at least one of the electrical connections between
- signal generator and signal processor
- output signal generator and interconnection circuit
- is a cable-free connection via separate circuits, particularly circuit boards.

8. Elongation sensor according to claim 7, wherein at least the signal transmission is cable-free.

9. Elongation sensor according to claim 7 or 8, wherein at least one of the electrical connections is formed as a plug and jack connection.

10. Elongation sensor according to anyone of claims 7 - 9, wherein the signal generator is connected to a first circuit board (4) by a cable-free connection, with which a second circuit board (5) is connected by plug and jack connection to the signal processing component (6) and a third circuit board (7) is connected by plug and jack connection to the output signal generator components (8).

11. Elongation sensor according to claim 10, wherein the three circuit boards (4, 5, 7) are connected by plug and jack connections (10), which in each case connect all three circuit boards (4, 5, 7) together.

12. Elongation sensor according to either of claims 10 or 11, wherein at least two of the three circuit boards (4, 5, 7) arc disposed in particular parallel to one another, one above the other and with their broad sides facing each other, the first circuit board (4) being especially disposed between the second (5) and third circuit board (7), and particularly the major part or all of the electronic components in each case being arranged on the side of the second (5) or third circuit board (7) facing the first circuit board (4).

13. Elongation sensor according to anyone of claims 10 - 12, wherein the first circuit board (4) is provided with a bandpass filter.

14. Elongation sensor according to anyone of claims 10 - 13, wherein the first circuit board (4) is directly connected to the waveguide (2) of the signal generator.

15. Elongation sensor according to anyone of claims 10 - 14, wherein the third circuit board (7) is connected in particular with a plug connection to a fourth circuit board (9), which carries the interconnection circuit components.

16. Elongation sensor according to anyone of claims 10 - 15, wherein the fourth circuit board (9) on the side, turned away from the signal generator, of the component formed by the first to third circuit board (4, 5, 7) is oriented transversally, in particular at a right angle to these circuit boards, so that the edges, turned away from the signal generator, of the first to third circuit board (4, 5, 7) are adjacent the face, turned towards the signal generator, of the fourth circuit board (9).

17. Elongation sensor according to anyone of claims 1 - 16, wherein the signal generator processor comprises an output of the signal generator formed by a Villary transformer producing the elongation-dependent value, a passive bandpass filter being arranged between the signal processor and sensor, a waveguide (2) for example.

18. Elongation sensor according to claim 17, wherein the bandpass filter is a highpass filter.

19. Elongation sensor according to claim 17 or 18, wherein the bandpass filter with the Villary transformer is mounted on a common carrier, in particular a common circuit board.

20. Elongation sensor according to claim 17 - 19, wherein the bandpass filter is a shock- and vibration filter.

21. Elongation sensor according to anyone of claims 1 - 20, wherein the signal processor comprises an output of the signal generator and produces an elongation-dependent value and makes this available as output signal, wherein the sensor is surrounded by a first shield (11), in particular a housing of electrically conductive material, preferably metal plate, which is surrounded by an insulating shell and by a second shield (13), in particular a housing of electrically conductive material, preferably metal plate, a shiftable magnet being positioned outside the second shield (13).

22. Elongation sensor according to claim 21, wherein the signal generator and the signal processor are disposed on a common carrier within the first shield (11).

23. Elongation sensor according to claim 22, wherein the common carrier is at least one circuit board or one hybrid circuit.

24. Elongation sensor according to claim 23, wherein the circuit boards, in particular also a first to fourth circuit board (4, 5, 7, 9) are mounted in a housing preferably forming the first shield (11), which is preferably surrounded by the second shield (13).

25. Elongation sensor according to claim 24, wherein the housing preferably forming the First shield (II) has guide grooves for receiving, guiding and retaining the circuit boards (4, 5, 7, 9).

26. Elongation sensor according to claim 23 - 25, wherein several or all circuit boards (4, 5, 7, 9) are mounted in a dimensionally-stable auxiliary housing of electrically non-conductive material, which is surrounded by the first shield (11).

27. Elongation sensor according to anyone of claims 1 - 26, wherein the housing is configured as an open hollow profile and is closed at the ends by covers (14, 15), a profiled gasket being arranged between the covers (14, 15) and the respective housing opening, which on the one hand seals a first region between the front face side of the housing and the cover and on the other hand a second region in the interior of the housing wall on the opening side, especially in active connection with a projection, extending into the housing opening, of the cover.

28. Elongation sensor according to claim 27, wherein the gasket has a flat gasket section in the first seal region (27), on whose radial inner-lying elongation, especially edge, a sealing lip as second seal region (28) is connected, is radially oriented outwards at an axial distance from the first seal region (27).

29. Elongation sensor according to either of claims 27 or 28, wherein the cover (14, 15) is secured to the housing by means of tightening elements, in particular bolts (17), the seal preferably also of the second seal region (28) radially inwardly surrounding the holes for the tightening elements.

30. Elongation sensor according to anyone of claims 1 - 29, wherein an optical signal transmitter is provided in the housing, said housing having a transparent portion (22), which is formed by a moulded piece of transparent material, fitted into a recess of the housing wall or the housing cover, and wherein the transparent moulded piece is sealed against the recess by means of gasket (23).

31. Elongation sensor according to claim 30, wherein the moulded piece is provided with a circumferential groove in which the gasket (23) preferably an O-ring is held, the gasket (23) preferably being supported elastically taut against the inner face, surrounding the moulded piece, of the opening.

32. Elongation sensor according to either of claims 30 or 31, wherein the moulded piece, inserted into the recess, is caulked against the recess.

33. Elongation sensor according to claim 32, wherein the moulded piece is fitted flush in the recess, so that it does not project outwards beyond the housing wall or cover wall and wherein the moulded piece projects on the inside of the housing or cover beyond its wall and is caulked in the projecting region so that it is fixed in a secure position.

34. Elongation sensor according to anyone of claims 1 - 33, wherein at least one plug-in output is provided on a housing part, especially on a cover of the housing, the output being formed as jack or plug and whose shield is connected to the shielded housing or cover, and wherein the outer shield (24, 25) and/or the connection lock of the output is integrally connected to the housing part.

35. Elongation sensor according to claim 34, wherein the output has a connection piece with internal or external screw thread, the connection piece being integrally formed with the metal housing or metal cover.

36. Elongation sensor according to claim 35, wherein the metal cover comprises several moulded connection pieces.

37. Elongation sensor according to anyone of claims 1 - 36, wherein the elongation sensor has at least one signal output, which is led out of the housing and wherein a programming device (31) is connected or is connectable to the signal output, by means of which the sensor can be programmed, especially in the case of analogue output signals.

38. Elongation sensor according to claim 37, wherein the signal connections of the signal output are protected against short circuits and stray voltages.

39. Elongation sensor according to either of claims 37 or 38, wherein the signal output has a sensor, by means of which the output connection is monitored so that when input signals or data are fed in, the sensor is set to a programming mode and, if input signals fail, to a measurement mode for output signals possibly combined with a time delay.

40. Elongation sensor according to claim 39, wherein the operating mode is changed in response to stray voltage, short circuit or modulation of serial data.

41. Elongation sensor according to claim 40, wherein a time window for changing the operating mode is provided.

42. Elongation sensor according to anyone of claims 1 - 41, wherein the elongation sensor comprises an optical interface, which is connected to at least one of the following devices:
- diagnostic output memory device,
- measured-value output memory device or measured-value output device,
- signal-type detector, for example a reading device or signal change device, stop/start device, pulse-width modulator, analogue signal detector,
- device for adjusting pulse-width, for recognizing the reflection type of the start signal, for determining an external or free running measurement,
- device for obtaining an average value over an infinite number of measurements.

## Revendications

1. Capteur de déplacement magnétostrictif conçu pour délivrer un signal dépendant du déplacement, comprenant un élément capteur sensible aux champs magnétiques qui forme un générateur de signaux, un processeur de signaux avec des éléments de traitement de signaux (6) et le cas échéant une sortie de diagnostic, lesquels sont logés dans un boîtier, ainsi que comprenant un aimant déplaçable qui agit sur l'élément capteur, **caractérisé en ce que** le capteur de déplacement peut être mis dans un mode de programmation et que la sortie de diagnostic comprend au moins un élément de détection pour la fonction élément capteur reconnaît un aimant.

2. Capteur de déplacement selon la revendication 1, dans lequel la sortie de diagnostic comprend un autre élément de détection pour la fonction capteur de déplacement se trouve en mode de programmation.

3. Capteur de déplacement selon l'une des revendications 1 ou 2, dans lequel la sortie de diagnostic comprend un autre élément de détection pour la surveillance de tension avec au moins deux valeurs de tension différentes de zéro.

4. Capteur de déplacement selon l'une des revendications 1 à 3, dans lequel la sortie de diagnostic comprend une interface infrarouge.

5. Capteur de déplacement selon l'une des revendications 1 à 4, dans lequel la sortie de diagnostic comprend un élément de sortie optique, en particulier dans la gamme d'ondes de la lumière visible.

6. Capteur de déplacement selon l'une des revendications 1 à 5, dans lequel la sortie de diagnostic comprend au moins deux éléments de détection selon les revendications 1 à 3.

7. Capteur de déplacement selon l'une des revendications 1 à 6, dans lequel le processeur de signaux détecte une sortie du générateur de signaux et en dérive ou produit une valeur dépendante du déplacement, le capteur de déplacement présente un générateur de signaux de sortie avec des éléments de génération de signaux de sortie (8), lequel convertit la valeur dépendante du déplacement en un signal de sortie numérique ou analogique, et présente un circuit d'interconnexion qui est monté entre le générateur de signaux de sortie et une sortie pour délivrer le signal dépendant du déplacement, et qu'au moins une des connexions électriques entre
- générateur de signaux et processeur de signaux ;
- générateur de signaux de sortie et circuit d'interconnexion
est une connexion sans fil entre des circuits séparés, en particulier des cartes de circuit imprimé séparées.

8. Capteur de déplacement selon la revendication 7, dans lequel au moins la transmission de signaux est réalisée sans fil.

9. Capteur de déplacement selon l'une des revendications 7 ou 8, dans lequel au moins une des connexions électriques est réalisée sous forme de connexion enfichable.

10. Capteur de déplacement selon l'une des revendications 7 à 9, dans lequel le générateur de signaux est connecté sans fil à une première carte de circuit imprimé (4) à laquelle une deuxième carte de circuit imprimé (5) avec des éléments de traitement de signaux (6) et une troisième carte de circuit imprimé (7) avec des éléments de génération de signaux de sortie (8) sont connectées par une connexion enfichable.

11. Capteur de déplacement selon la revendication 10, dans lequel les trois cartes de circuit imprimé (4, 5, 7) sont connectées par des connecteurs enfichables qui relient chacun les trois cartes de circuit imprimé (4, 5, 7) les unes aux autres.

12. Capteur de déplacement selon l'une des revendications 10 ou 11, dans lequel au moins deux des trois cartes de circuit imprimé (4, 5, 7) sont disposées l'une au-dessus de l'autre, en particulier parallèlement l'une à l'autre par leurs côtés plats, la première carte de circuit imprimé (4) étant en particulier disposée entre la deuxième (5) et la troisième (7) carte de circuit imprimé et les éléments électroniques étant en particulier disposés en majorité ou en totalité (5) du côté de la deuxième ou de la troisième (7) carte de circuit imprimé qui est tourné vers la première carte de circuit imprimé (4).

13. Capteur de déplacement selon l'une des revendications 10 à 12, dans lequel un filtre passe-bande est disposé sur la première carte de circuit imprimé (4).

14. Capteur de déplacement selon l'une des revendications 10 à 13, dans lequel la première carte de circuit imprimé (4) est connectée directement au guide d'ondes (2) du générateur de signaux.

15. Capteur de déplacement selon l'une des revendications 10 à 14, dans lequel la troisième carte de circuit imprimé (7) est connectée, en particulier par une connexion enfichable, à une quatrième carte de circuit imprimé (9) qui porte les éléments du circuit d'interconnexion.

16. Capteur de déplacement selon l'une des revendications 10 à 15, dans lequel la quatrième carte de circuit imprimé (9) est disposée du côté du composant formé par les première, deuxième et troisième cartes de circuit imprimé (4, 5, 7) opposé au générateur de signaux, transversalement, en particulier à angle droit par rapport à ces cartes de circuit imprimé, de manière que les bords de la première, deuxième et troisième cartes de circuit imprimé (4, 5, 7) opposés au générateur de signaux soient voisins de la surface de la quatrième carte de circuit imprimé (9) tournée vers le générateur de signaux.

17. Capteur de déplacement selon l'une des revendications 1 à 16, dans lequel le processeur de signaux détecte une sortie du générateur de signaux qui est réalisé sous forme de transformateur Villary et forme une valeur dépendante du déplacement, et qu'un filtre passe-bande passif est monté entre le processeur de signaux et l'élément capteur, par exemple un guide d'ondes (2).

18. Capteur de déplacement selon la revendication 17, dans lequel le filtre passe-bande est un filtre passe-haut.

19. Capteur de déplacement selon l'une des revendications 17 ou 18, dans lequel le filtre passe-bande et le transformateur Villary sont disposés sur un support commun, en particulier une carte de circuit imprimé commun.

20. Capteur de déplacement selon l'une des revendications 17 à 19, dans lequel le filtré passe-bande est un filtre à chocs et/ou vibrations,

21. Capteur de déplacement selon l'une des revendications 1 à 20, dans lequel le processeur de signaux détecte une sortie du générateur de signaux et forme et met à disposition comme signal de sortie une valeur dépendante du déplacement, et que l'élément capteur est entouré par un premier blindage (11), en particulier un boîtier en matériau électriquement conducteur, de préférence en tôle métallique, qui est entouré par une enveloppe en matériau isolant et par un deuxième blindage (13), en particulier un boîtier en matériau électriquement conducteur, de préférence en tôle métallique, un aimant déplaçable pouvant être disposé à l'extérieur du deuxième blindage (13).

22. Capteur de déplacement selon la revendication 21, dans lequel le générateur de signaux et le processeur de signaux sont disposés sur un support commun à l'intérieur du premier blindage (11).

23. Capteur de déplacement selon la revendication 22, dans lequel le support commun est au moins une carte de circuit imprimé ou un circuit hybride.

24. Capteur de déplacement selon la revendication 23, dans lequel la carte de circuit imprimé, en particulier aussi les première, deuxième, troisième et quatrième cartes de circuit imprimé (4, 5, 7, 9), sont placées dans un boîtier formant de préférence le premier blindage (11) qui est de préférence entouré par le deuxième blindage (13).

25. Capteur de déplacement selon la revendication 24, dans lequel le boîtier formant de préférence le premier blindage (11) présente des rainures de guidage pour insérer, guider et maintenir les cartes de circuit imprimé (4, 5, 7, 9).

26. Capteur de déplacement selon l'une des revendications 23 à 25, dans lequel plusieurs ou toutes les cartes de circuit imprimé (4, 5, 7, 9) sont placées dans un boîtier auxiliaire de forme stable en matériau non conducteur électriquement qui est entouré par le premier blindage (11).

27. Capteur de déplacement selon l'une des revendications 1 à 26, dans lequel le boîtier est réalisé sous forme de profilé creux ouvert qui est fermé aux extrémités par des couvercles (14, 15), et qu'entre les couvercles (14, 15) et l'embouchure respective du boîtier est disposé un joint profilé qui assure l'étanchéité d'une part entre une première zone située entre le bord de la face frontale du boîtier et le couvercle et, d'autre part, d'une deuxième zone dans la zone intérieure de la paroi de boîtier côté embouchure, en particulier en coopérant avec une saillie du couvercle pénétrant dans l'embouchure du boîtier.

28. Capteur de déplacement selon la revendication 27, dans lequel le joint présente une zone de joint plat dans la première zone d'étanchéité (27), à l'extension radialement intérieure de laquelle, en particulier à l'arête radialement intérieure de laquelle, est raccordée une lèvre d'étanchéité formant une deuxième zone d'étanchéité (28) qui est axialement distante de la première zone d'étanchéité (27) et dirigée radialement vers l'extérieur par rapport à celle-ci.

29. Capteur de déplacement selon l'une des revendications 27 ou 28, dans lequel le couvercle (14, 15) est fixé au boîtier au moyen d'éléments de serrage, en particulier de vis (17), le joint, de préférence aussi la deuxième zone d'étanchéité (28), entourant de manière radialement intérieure les trous de passage pour les moyens de serrage.

30. Capteur de déplacement selon l'une des revendications 1 à 29, dans lequel un émetteur de signaux optiques est disposé dans le boîtier, auquel est associée une zone de boîtier optiquement transparente (22) qui est formée par une pièce façonnée en matériau optiquement transparent adaptée dans une ouverture de la paroi de boîtier ou du couvercle de boîtier, et que la pièce façonnée optiquement transparente est rendue étanche par rapport à l'ouverture au moyen d'un joint (23).

31. Capteur de déplacement selon la revendication 30, dans lequel la pièce façonnée présente une rainure périphérique dans laquelle le joint (23), de préférence un joint torique, est logé, le joint (23) prenant appui de préférence sous précontrainte élastique contre le périmètre de l'ouverture entourant la pièce façonnée.

32. Capteur de déplacement selon l'une des revendications 30 ou 31, dans lequel la pièce façonnée logée dans l'ouverture est sertie sur l'ouverture.

33. Capteur de déplacement selon la revendication 32, dans lequel la pièce façonnée est encastrée à fleur dans l'ouverture de sorte qu'elle ne dépasse pas vers l'extérieur de la paroi ou du couvercle de boîtier et que la pièce façonnée dépasse de la paroi du boîtier ou du couvercle côté intérieur et est sertie dans sa partie en saillie de manière à être solidement fixée.

34. Capteur de déplacement selon l'une des revendications 1 à 33, dans lequel il est prévu au moins une sortie enfichable sur une partie de boîtier, en particulier sur un couvercle du boîtier, la sortie est réalisée sous forme de connecteur mâle ou femelle et son blindage est relié au boîtier ou couvercle blindé, et que le blindage extérieur (24, 25) et/ou la protection de raccordement de la sortie est relié d'une seule pièce à la partie de boîtier.

35. Capteur de déplacement selon la revendication 34, dans lequel la sortie présente un raccord à filetage intérieur ou extérieur ou est formée par celui-ci, le raccord étant formé d'une seule pièce sur la partie de boîtier métallique ou le couvercle métallique.

36. Capteur de déplacement selon la revendication 35, dans lequel le couvercle métallique présente plusieurs raccords formés sur lui,

37. Capteur de déplacement selon l'une des revendications 1 à 36, dans lequel le capteur de déplacement présente au moins une sortie de signaux qui est menée hors du boîtier, et qu'un élément de programmation (31) est connecté ou connectable à la sortie de signaux, au moyen duquel le capteur peut être programmé, en particulier dans le cas de signaux de sortie analogiques.

38. Capteur de déplacement selon la revendication 37, dans lequel les lignes de signaux de la sortie de signaux sont résistantes aux courts-circuits et aux tensions externes.

39. Capteur de déplacement selon l'une des revendications 37 ou 38, dans lequel la sortie de signaux présente un capteur au moyen duquel la ligne de sortie est surveillée de manière qu'en cas d'injection de signaux ou données d'entrée, le capteur soit commuté dans un mode de programmation et, en l'absence de signaux d'entrée, commuté dans le mode de mesure des signaux de sortie, le cas échéant en combinaison avec un élément de temporisation.

40. Capteur de déplacement selon la revendication 39, dans lequel le changement de mode de fonctionnement est effectué par tension externe, court-circuit ou modulation de données sérielles.

41. Capteur de déplacement selon la revendication 40, dans lequel une fenêtre de temps est installée pour le changement de mode de fonctionnement.

42. Capteur de déplacement selon l'une des revendications 1 à 41, dans lequel le capteur de déplacement présente une interface optique qui est connectée au moins aux éléments suivants :
- mémoire de sortie de diagnostic,
- mémoire de sortie de valeurs mesurées ou élément de sortie de valeurs mesurées,
- élément de détection de type de signal, par exemple élément de lecture ou élément de changement de signal, élément de démarrage/arrêt, modulateur de largeur d'impulsions, élément de détection de signaux analogiques,
- élément de réglage de largeur d'impulsions pour reconnaître le type de réflexion du signal de démarrage, pour identifier une mesure externe ou spontanée,
- élément pour former une valeur moyenne sur 1 à n mesures.
